Europäisches Patentamt

European Patent Office

Office européen des brevets

(11) Numéro de publication : **0 642 239 A1**

(12) **DEMANDE DE BREVET EUROPEEN**

(21) Numéro de dépôt : **94401948.8**

(22) Date de dépôt : **01.09.94**

(51) Int. Cl.⁶ : **H04J 3/12**

(30) Priorité : **06.09.93 FR 9310568**

(43) Date de publication de la demande :
**08.03.95 Bulletin 95/10**

(84) Etats contractants désignés :
**AT BE CH DE DK ES FR GB IT LI NL SE**

(71) Demandeur : **ALCATEL MOBILE
COMMUNICATION FRANCE
10, rue de la Baume
F-75008 Paris (FR)**

(72) Inventeur : **Dupuy, Pierre
14, rue du Commandeur
F-75014 Paris (FR)**

(74) Mandataire : **Fournier, Michel et al
SOSPI
14-16, rue de la Baume
F-75008 Paris (FR)**

(54) **Substitution des bits de synchronisation dans une trame de transmission.**

(57)  Trame de transmission comprenant un drapeau de synchronisation, des bits de synchronisation (S1 à S8) et des bits d'information (B1 à B63), dans laquelle un bit de contrôle (C1) est substitué à un des bits de synchronisation (S1) si toute séquence de bits d'une longueur égale à celle du drapeau de synchronisation incluant ce bit de synchronisation (S1) diffère de ce drapeau de synchronisation d'au moins un bit en sus de ce bit de synchronisation (S1).
  Emetteur et récepteur adaptés à cette trame.

## FIG. 1

| 0 | 0 | 0 | 0 | 0 | 0 | 0 | 0 |
|----|-----|-----|-----|-----|-----|-----|-----|
| 1 | B1 | B2 | B3 | B4 | B5 | B6 | B7 |
| S1 | B8 | B9 | B10 | B11 | B12 | B13 | B14 |
| S2 | B15 | B16 | B17 | B18 | B19 | B20 | B21 |
| S3 | B22 | B23 | B24 | B25 | B26 | B27 | B28 |
| S4 | B29 | B30 | B31 | B32 | B33 | B34 | B35 |
| S5 | B36 | B37 | B38 | B39 | B40 | B41 | B42 |
| S6 | B43 | B44 | B45 | B46 | B47 | B48 | B49 |
| S7 | B50 | B51 | B52 | B53 | B54 | B55 | B56 |
| S8 | B57 | B58 | B59 | B60 | B61 | B62 | B63 |

EP 0 642 239 A1

Dans un système de communication synchrone entre équipements de traitement de données, une des méthodes les plus couramment utilisées pour envoyer des messages consiste à définir une structure de trame caractérisée par

- un drapeau de synchronisation,
- un codage particulier des informations utiles à transmettre, tel que le drapeau de synchronisation ne puisse jamais être reconnu au milieu du train de données transmises.

Une des façons les plus connues pour mettre en oeuvre ce procédé consiste choisir un drapeau qui est une suite constante de P zéros suivis d'un '1'. Le codage de l'information consiste alors simplement à insérer un '1' chaque fois qu'une suite de (P-1) '0' a été transmise. Par exemple, si le drapeau est '00001' le message '0010 0000 10' sera transmis sous la forme : '00001 0010 00100 10'. Les chiffres soulignés correspondent au drapeau de synchronisation, et au '1' inséré (les espaces n'ont pas d'autre rôle que de faciliter la lecture).

Cette méthode souffre toutefois d'un défaut : le temps de transmission d'un message dépend de son contenu, ce qui est très gênant lorsqu'on souhaite assurer un délai fixe d'acheminement.

La solution connue à ce problème consiste à insérer un '1' tous les (P-1) bits d'information transmis : on est ainsi sûr qu'on ne rencontrera jamais P zéros successifs et le temps de transmission est toujours le même quel que soit l'information à transmettre. Un exemple bien connu de ce procédé est celui des trames V110 définies par le CCITT (Comité Consultatif International du Téléphone et du Télégraphe). Elle sont constituées d'un drapeau de huit zéros suivi d'un '1', un '1' étant ensuite inséré tous les 7 bits pour former une trame de 80 bits, 17 bits étant utilisés pour la synchronisation et 63 pour les informations.

Ce type de trame présente donc l'avantage d'avoir un format fixe. Cependant, les bits forcés à '1' qui se répètent périodiquement tous les P bits à la suite du drapeau de synchronisation et que l'on conviendra donc d'appeler bits de synchronisation ne sont pas généralement tous nécessaires.

Il s'ensuit que la transmission n'est pas optimisée puisque des bits inutiles sont transmis.

La présente invention a ainsi pour objet une trame de transmission de format fixe qui présente une efficacité accrue sur le plan de la transmission.

Cette trame de transmission comprend un drapeau de synchronisation, des bits de synchronisation et des bits d'information, et de plus, un bit de contrôle est substitué à un des bits de synchronisation si toute séquence de bits d'une longueur égale à celle du drapeau de synchronisation incluant ce bit de synchronisation diffère de ce drapeau de synchronisation d'au moins un bit en sus de ce bit de synchronisation.

L'invention propose également un émetteur prévu pour l'émission d'une trame de transmission comprenant un drapeau de synchronisation, des bits de synchronisation et des bits d'information, qui comprend des moyens d'analyse pour identifier un des bits de synchronisation au moins tel que toute séquence de bits d'une longueur égale à celle du drapeau de synchronisation incluant ce bit de synchronisation diffère de ce drapeau de synchronisation d'au moins un bit en sus de ce bit de synchronisation et des moyens pour substituer au bit de synchronisation ainsi identifié un bit de contrôle.

Selon un premier mode de réalisation de l'émetteur, un bit de contrôle étant associé à chacun des bits de synchronisation, il transmet les seuls bits de contrôle qui correspondent aux bits de synchronisation identifiés par les moyens d'analyse.

Avantageusement, les bits de contrôle sont des bits sucessifs d'un code qui possède de bonnes propriétés d'autocorrélation.

Selon un deuxième mode de réalisation de l'émetteur, les bits de contrôle étant classés par ordre de priorité, il comprend des moyens de répartition pour affecter ces bits de contrôle selon leur rang aux bits de synchronisation identifiés par les moyens d'analyse selon leur ordre d'identification.

L'invention propose aussi un récepteur pour la réception d'une trame de transmission émise par un émetteur tel que ci-dessus, qui comprend également des moyens d'analyse pour déterminer la valeur théorique des bits de synchronisation et des moyens de récupération pour identifier celui au moins des bits de synchronisation qui a fait l'objet d'une substitution par le bit de contrôle.

L'invention apparaîtra maintenant de manière plus précise dans le cadre de la description d'exemples de réalisation donné à titre indicatif en se référant aux figures annexées qui représentent :

- la figure 1, un exemple de trame de l'état de la technique,
- la figure 2, une représentation schématique du traitement d'un bit de synchronisation,
- la figure 3, une représentation schématique du traitement d'analyse qui concerne la totalité des bits de synchronisation,
- la figure 4, une représentation schématique du traitement de répartition des bits de contrôle effectué par l'émetteur selon le deuxième mode de réalisation,
- la figure 5, une représentation schématique du traitement de récupération des bits de contrôle effectué par le récepteur selon le premier mode de réalisation,
- la figure 6, une représentation schématique du traitement de récupération des bits de contrôle effectué par le récepteur selon le deuxième mode de réalisation.

L'invention sera présentée en référence à la trame V11O déjà citée car elle a le mérite d'être universellement connue.

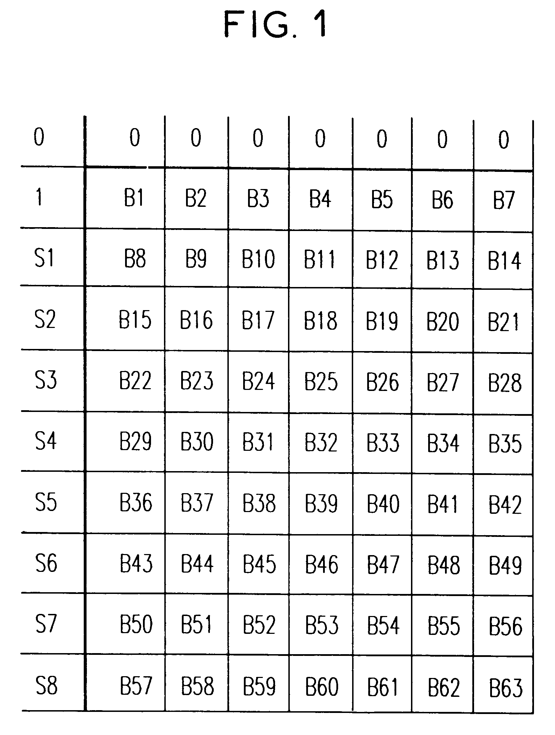

Cette trame représentée à la figure 1 sous forme d'un tableau est donc une séquence formée d'un drapeau de synchronisation comprenant huit 'O' suivi d'un '1', puis 7 bits d'information B1 à B7, un premier bit de synchronisation S1 positionné à '1' suivi de 7 bits d'information B8 à B14, un deuxième bit de synchronisation S2 positionné à '1' suivi de 7 bits d'information B15 à B21 et ainsi de suite pour terminer par un huitième bit de synchronisation S8 positionné à '1' suivi de 7 bits d'information B57 à B63.

Si l'on considère le premier bit de synchronisation S1, il est forcé à '1' pour le cas où il existerait une séquence de huit zéros consécutifs dans la suite de bits d'information B1 à B14. Si ce n'est pas le cas, ce forçage à '1' n'est pas nécessaire et on peut donc affecter une valeur variable à ce premier bit de synchronisation S1.

Si l'on choisit de donner une valeur variable à ce bit, celle-ci peut être égale à 'O'. Il convient donc de rechercher dans cette suite de bits d'information B1 à B14 s'il existe au moins une séquence de sept zéros consécutifs.

Si une telle séquence est présente, il faut conserver ce bit de synchronisation S1 à 1, sinon on peut lui substituer un bit de contrôle.

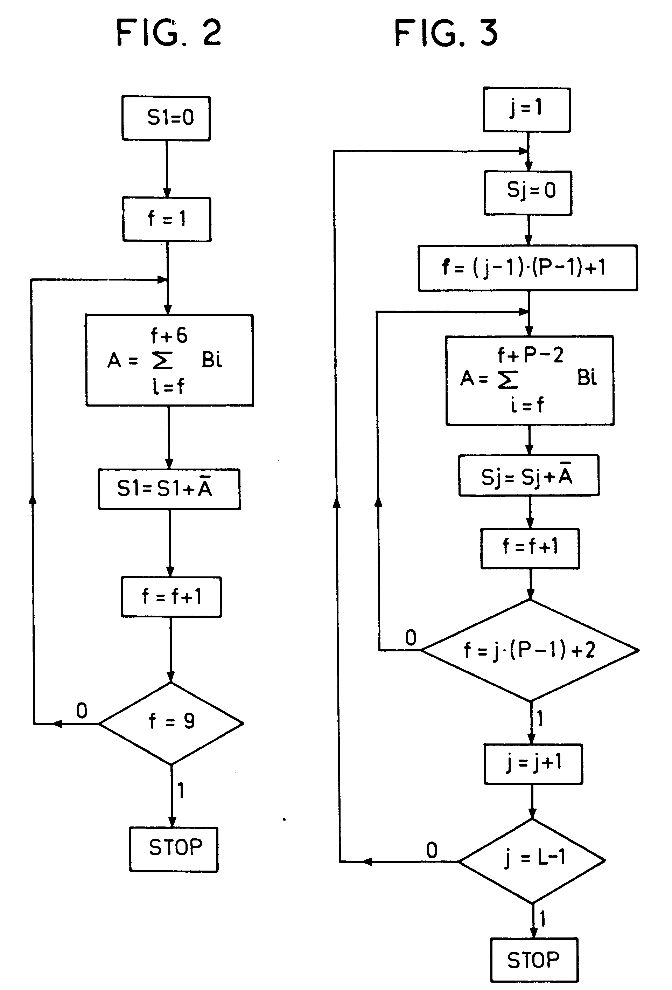

Pour ce faire, en référence à la figure 2, on commence par initialiser ce bit S1 à 'O' et l'index f du premier bit de la séquence à '1'. On calcule la somme A des bits d'information B1 à B7, on prend son complément $\overline{A}$ et on affecte maintenant au bit S1 la valeur '1' si $\overline{A}$ vaut '1'.

Cette opération est en réalité la somme logique de S1 et de $\overline{A}$.

En effet si la séquence de bits d'information B1 à B7 est entièrement à 'O' il faut conserver le bit S1 à '1'.

On incrémente maintenant l'index f d'une unité pour considérer la séquence de bits d'information B2 à B8. On fait la somme A des bits d'information de cette séquence et on force le bit S1 à '1' si le complément $\overline{A}$ de cette somme vaut '1'.

On procède ainsi de suite en incrémentant l'index f jusqu'à considérer la séquence de bits d'information B8 à B14 pour en faire la somme A et forcer le bit S1 à '1' si le complément $\overline{A}$ de cette somme vaut '1'. Par convention, on représente dans la figure 2 et toutes celles qui suivent une réponse affirmative par le chiffre '1' et une réponse négative par le chiffre 'O'.

A l'issue de ces opérations, si le bit S1 est à '1' il faut le conserver en tant que bit de synchronisation tandis que dans le cas contraire on peut lui substituer un bit de contrôle.

On généralise aisément le traitement du premier bit de synchronisation S1 à un traitement d'analyse qui concerne tous les bits de synchronisation en référence à la figure 3. On envisage même le cas d'une trame à P colonnes, c'est-à-dire dont le drapeau de synchronisation à une longueur P, et à L lignes.

Ainsi, on commence par initialiser l'indice j du bit de synchronisation à '1'.

Dans une première étape, on initialise le bit de synchronisation Sj à 'O' et on initialise également l'index f du premier bit de la première séquence à considérer en relation avec le bit de synchronisation Sj :

$$f = (j - 1) . (P - 1) + 1$$

Dans une seconde étape, on fait la somme A des bits d'information Bi en faisant varier i de f à f + P-2, on force la valeur du bit de synchronisation Sj à '1' si le complément $\overline{A}$ de cette somme vaut '1' et on incrémente l'index f d'une unité. Si cet index f est inférieur ou égal à j.(P-1) +1 on recommence cette deuxième étape, tandis que lorsque f vaut j.(P-1)+2, on incrémente l'indice j d'une unité.

Si cet indice j est inférieur à L-1, on recommence la première étape suivie naturellement de P fois la seconde étape. Par contre, si l'indice j vaut L-1, le traitement d'analyse est terminé et chaque bit de synchronisation Sj est à '1', respectivement à 'O', selon qu'il faut le conserver comme bit de synchronisation, respectivement qu'on peut lui affecter un bit de contrôle.

On prévoit donc un émetteur qui reçoit la totalité des bits d'information B1 à BN où N vaut (P-1).(L-1). Il effectue le traitement d'analyse décrit ci-dessus avec des moyens d'analyse, un microprocesseur par exemple, pour produire les bits de synchronisation S1 à SM où M vaut (L-2).

On comprend bien que, statistiquement, il est fort peu probable que la totalité des bits de synchronisation soient à '1'. L'émetteur dispose donc en sus de M bits de contrôle même s'ils ne pourront tous être transmis.

Selon un premier mode de réalisation de l'émetteur, celui-ci produit lui-même les bits de contrôle C1 à CM de sorte que le bit Cj représente la parité des bits d'information B[(j - 1)·(P - 1) + 1] à B [(j + 1)·(P - 1)]. Il réalise ensuite l'opération logique suivante pour tout j compris entre 1 et M :

$$Sj = Sj + Cj$$

L'émetteur produit ensuite une trame conformément à ce qui a été décrit à destination d'un récepteur.

Selon un deuxième mode de réalisation de l'émetteur, on considère que tous les bits de contrôle n'ont pas la même importance et on les classe donc par ordre d'importance croissante. Ainsi, si à l'issue du traitement d'analyse seul un bit de synchronisation est à 'O', celui-ci sera employé pour transmettre le premier bit de contrôle et les autres bits de contrôle ne seront pas transmis.

A titre d'exemple, l'émetteur produit lui-même les bits de contrôle de sorte que le premier C1 représente la parité de la totalité des bits d'information B1 à BN, le second C2 la parité de la première moitié des bits d'information, le troisième C3 la parité de la seconde moitié des bits d'information et ainsi de suite.

L'émetteur procède alors à un traitement de répartition des bits de commande sur les bits de synchronisation disponibles à l'aide de moyens de répartition, le même microprocesseur, par exemple.

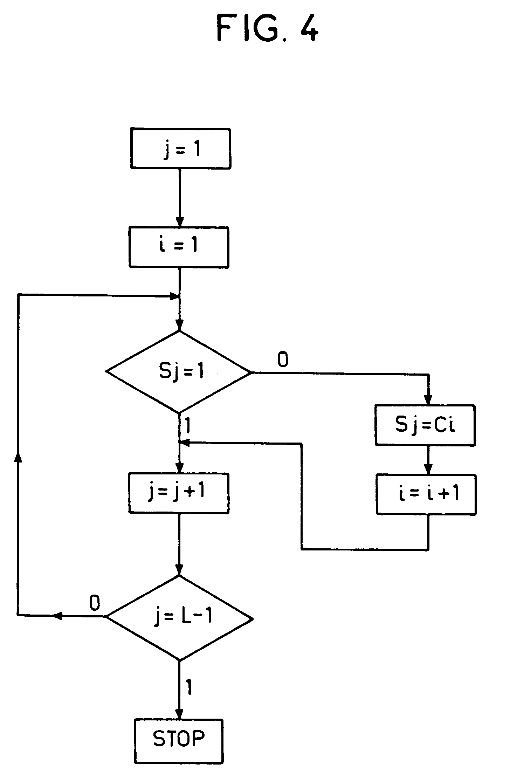

Ce traitement de répartition, en référence à la figure 4, commence par une initialisation à '1' d'un premier j et d'un deuxième i indices.

Dans une étape itérative, la valeur du jème bit de synchronisation est comparée à '1'; en cas d'inégalité Sj prend la valeur de Ci et i est incrémenté d'une unité. De plus, quelle que soit la valeur de Sj, j est incrémenté d'une unité. La valeur de ce premier indice j est alors comparée à L-1. En cas d'inégalité, l'étape itérative est répétée, tandis que dans le cas contraire, le traitement de répartition est terminé.

L'émetteur produit alors une trame comme dans le cas précédent.

On ajoutera ici que l'invention s'applique naturellement quelle que soit la nature des bits de contrôle, y compris s'ils sont élaborés à l'extérieur de l'émetteur.

On prévoit également un récepteur qui reçoit les trames envoyées par l'émetteur. On admet ici que ce récepteur est synchronisé, c'est-à-dire qu'il a détecté le drapeau de synchronisation et que par conséquent, il sait identifier la position des différents bits dans la trame.

Par ailleurs, on s'attache uniquement au traitement des bits de synchronisation dans le cadre de la présente invention. Ainsi, par convention, on nommera jème bit reçu Rj celui qui correspond au jème bit de synchronisation Sj émis par l'émetteur, ceci pour toute valeur de j comprise entre 1 et (L-2).

Le récepteur qui reçoit une trame commence donc par réaliser un traitement d'analyse comme l'émetteur pour déterminer la valeur théorique des bits de synchronisation Sj.

Selon un premier mode de réalisation du récepteur, celui-ci est prévu pour fonctionner en combinaison avec l'émetteur dans son premier mode de réalisation.

Le récepteur procède alors à un traitement de récupération pour identifier la nature des bits reçus avec des moyens de récupération tels qu'un microprocesseur.

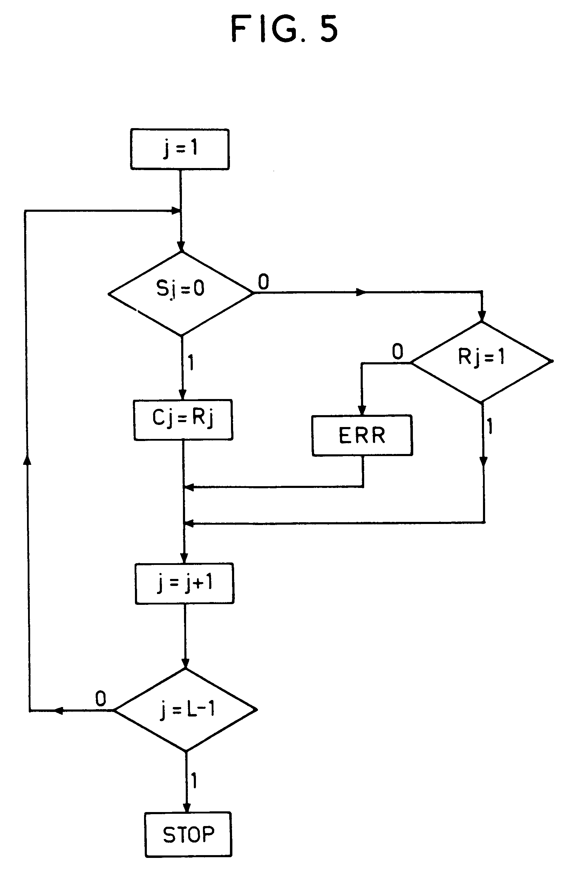

Le traitement de récupération, en référence à la figure 5, commence par une initialisation à '1' de l'indice j. Dans une étape itérative, il compare la valeur théorique de jème bit de synchronisation Sj à 'O'. En cas d'inégalité, on produit un signal d'erreur si le jième bit reçu Rj n'est pas à '1', tandis qu'en cas d'égalité, la valeur du jième bit reçu Rj est affectée au jième bit de contrôle Cj. L'indice j est alors incrémenté d'une unité puis il est comparé à (L-1). En cas d'inégalité l'étape itérative est répétée, alors qu'en cas d'égalité le traitement est terminé.

Le récepteur peut alors traiter les bits de commande qui ont effectivement été transmis et ce point précis ne sera pas développé car il sort du cadre de la présente invention.

Selon un deuxième mode de réalisation du récepteur, celui-ci est prévu pour fonctionner en combinaison avec l'émetteur dans son deuxième mode de réalisation.

A la suite du traitement d'analyse, le récepteur procède à un autre traitement de récupération, avec d'autres moyens de récupération tel qu'un microprocesseur.

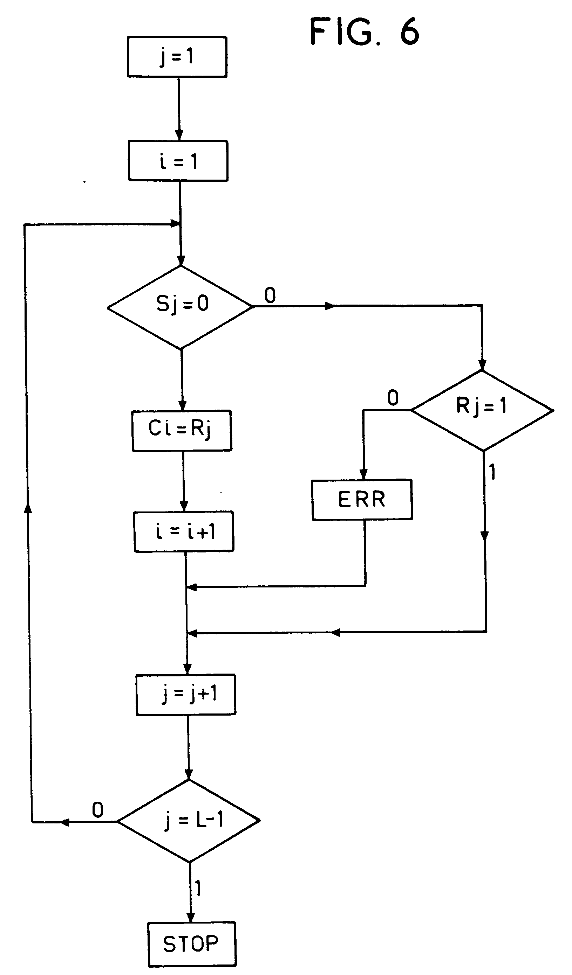

Ce traitement de récupération, en référence à la figure 6, commence par une initialisation à '1' d'un premier j et d'un deuxième i indices.

Durant une étape itérative, la valeur théorique du jième bit de synchronisation Sj est comparée à 'O'. En cas d'inégalité, on produit un signal d'erreur si le jième bit reçu Rj n'est pas à '1', tandis qu'en cas d'égalité, la valeur du jième bit reçu Rj est affectée au iième bit de contrôle Ci et le deuxième indice i est incrémenté d'une unité. Ensuite, le premier indice j est incrémenté d'une unité et il est comparé à (L-1).

En cas d'inégalité l'étape itérative est répétée, alors qu'en cas d'égalité le traitement est terminé.

En conclusion, l'invention permet d'optimiser l'efficacité d'une trame en affectant des bits de contrôle aux bits de synchronisation qui ne sont pas nécessaires. Une application avantageuse consiste à utiliser ces bits de contrôle pour sécuriser la transmission, bien que d'autres applications qui n'échappent pas à l'homme du métier soient possibles.

En effet un des problèmes liés à la structure des trames du type de la trame V110 est que la transmission peut être entachée d'erreur ou perturbée d'une autre façon.

Les erreurs les plus connues concernent un bit isolé ou un train de bits erroné, l'absence ou le doublement d'un bit.

Dans tous ces cas il est possible de recevoir par erreur un drapeau de synchronisation, suite à l'inversion d'un des bits de synchronisation ou suite à une discontinuité du format de la trame.

Cette réception erronée est très gênante lorsqu'on veut éviter de devoir attendre une trame complète avant de valider le bloc de données en cours de réception.

On voit que dans ces cas là on a tout intérêt à remplacer les bits de synchronisation par des étiquettes qui correspondent à leur ordre d'apparition dans la trame : si la première étiquette reçue n'est pas celle qui porte le numéro 1, alors il y a une erreur de synchronisation.

Malheureusement cette technique diminue de façon importante le débit utile. Dans le cas des trames V11O par exemple, le fait de réserver un bit à cet usage dans chaque linge de données fait perdre un septième du débit.

Le premier mode de réalisation de la présente invention peut être utilisé de façon avantageuse pour résoudre ce problème de synchronisation dans la grande majorité des cas.

En effet, les bits de synchronisation Sj sont remplacés par les bits de contrôle Cj lorsque c'est possible.

On choisit d'affecter à ces bits de contrôle un train binaire qui possède de bonnes propriétés d'autocorrélation. A titre d'exemple, les bits de contrôle C1 à C8 valent 'O11OOO10'.

On fait ici l'hypothèse que le récepteur a bien reçu le premier et le dernier bits du drapeau de synchronisation respectivement à 'O' et à '1' et qu'il a identifié le premier R1 et le second R2 bits reçus qui correspondent respectivement aux premier C1 et deuxième C2 bits de contrôle.

En considérant ces quatre bits dans leur ordre de réception, les configurations suivantes peuvent se présenter, configurations dans lesquelles un bit inconnu est figuré par un '?' :

- O101 : la synchronisation est bonne puisqu'il n'y a qu'une façon de recevoir cette suite de bits,
- O10? : il y a deux positions de trames qui correspondent à cette suite de bits,
- O1O? : la synchronisation est bonne,
- O1?? : il y a trois positions de trames qui correspondent à cette suite de bits.

On voit donc qu'il est déjà possible de qualifier la trame si le bit R2 est bien reçu.

En réitérant ce principe, à la réception de R3, il sera possible de diminuer encore le nombre de cas indéterminés et de décider soit que le risque d'erreur est devenu acceptable soit qu'on ne peut pas encore considérer les données reçues comme valides.

Cette méthode est particulièrement intéressante lorsqu'il est nécessaire d'avoir reçu un certain nombre de lignes de données avant de pouvoir commencer à les traiter : l'attente d'un nombre suffisant de bits Ri sera le plus souvent masquée par l'attente des bits à traiter.

Le spécialiste du codage aura remarqué que le train de bits Ci influe fortement sur la capacité de détection de la méthode utilisée et que lorsqu'il existe un code de Barker correspondant à la longueur de trame, il constitue un bon choix.

D'une façon générale, la détermination de la valeur optimale du train de bits Ci en fonction de la longueur de la trame et du nombre de bits reçus pour lequel on veut optimiser la méthode est un problème qui se résout facilement par une étude exhaustive de tous les cas de figure correspondant à ces choix.

Pour terminer, on ajoutera qu'il est possible d'affecter aux bits de contrôle une valeur qui est une combinaison de plusieurs données, pourvu que le récepteur ait les moyens de récupérer ces données.

A titre d'exemple, un bit de contrôle peut résulter de l'opération logique "OU exclusif" entre un bit de parité et un bit de code.

Par ailleurs l'invention s'applique quel que soit le nombre de bits de contrôle, y compris si ce nombre est égal à l'unité. Dans ce dernier cas, on peut se contenter de rechercher le premier bit de synchronisation qui n'est pas nécessaire pour le remplacer par l'unique bit de contrôle. On peut également prévoir de placer ce bit de contrôle dans plusieurs bits de synchronisation qui ne sont pas nécessaires, ceci pour obtenir une redondance qui accroîtra la probabilité d'une bonne réception de ce bit.

**Revendications**

1) Trame de transmission comprenant un drapeau de synchronisation, des bits de synchronisation (S1 à S8) et des bits d'information (B1 à B63), caractérisée en ce qu'un bit de contrôle (C1) est substitué à un desdits bits de synchronisation (S1) si toute séquence de bits d'une longueur égale à celle du drapeau de synchronisation incluant ce bit de synchronisation (S1) diffère de ce drapeau de synchronisation d'au moins un bit en sus dudit bit de synchronisation (S1).

2) Emetteur prévu pour l'émission d'une trame de transmission comprenant un drapeau de synchronisation, des bits de synchronisation (S1 à S8) et des bits d'information. (B1 à B63), caractérisé en ce qu'il comprend des moyens d'analyse pour identifier un desdits bits de synchronisation (S1) au moins tel que toute séquence de bits d'une longueur égale à celle du drapeau de synchronisation incluant ce bit de synchronisation (S1) diffère de ce drapeau de synchronisation d'au moins un bit en sus dudit bit de synchronisation et des moyens pour substituer au bit de synchronisation ainsi identifié un bit de contrôle (C1).

3) Emetteur selon la revendication 2 caractérisé en ce que, un bit de contrôle (Cj) étant associé à chacun (Sj) desdits bits de synchronisation, il transmet les seuls bits de contrôle qui correspondent auxdits bits de synchronisation identifiés par lesdits moyens d'analyse.

4) Emetteur selon la revendication 3 caractérisé en ce que, lesdits bits de contrôle sont des bits successifs d'un code qui possède de bonnes propriétés d'autocorrélation.

5) Emetteur selon la revendication 2 caractérisé en ce que, lesdits bits de contrôle (C1 à C8) étant classés par ordre de priorité, il comprend des moyens de répartition pour affecter ces bits de contrôle selon leur rang aux bits de synchronisation (Sj) identifiés par lesdits moyens d'analyse selon leur ordre d'identification.

6) Récepteur pour la réception d'une trame de transmission émise par un émetteur selon l'une quelconque des revendications 2 à 5, caractérisé en ce qu'il comprend également des moyens d'analyse pour déterminer la valeur théorique (Sj) desdits bits de synchronisation et des moyens de récupération pour identifier celui au moins desdits bits de synchronisation (S1) qui a fait l'objet d'une substitution par ledit bit de contrôle (C1).

# FIG. 1

| 0 | 0 | 0 | 0 | 0 | 0 | 0 | 0 |
|---|---|---|---|---|---|---|---|
| 1 | B1 | B2 | B3 | B4 | B5 | B6 | B7 |
| S1 | B8 | B9 | B10 | B11 | B12 | B13 | B14 |
| S2 | B15 | B16 | B17 | B18 | B19 | B20 | B21 |
| S3 | B22 | B23 | B24 | B25 | B26 | B27 | B28 |
| S4 | B29 | B30 | B31 | B32 | B33 | B34 | B35 |
| S5 | B36 | B37 | B38 | B39 | B40 | B41 | B42 |
| S6 | B43 | B44 | B45 | B46 | B47 | B48 | B49 |
| S7 | B50 | B51 | B52 | B53 | B54 | B55 | B56 |
| S8 | B57 | B58 | B59 | B60 | B61 | B62 | B63 |

EP 0 642 239 A1

# FIG. 2

# FIG. 3

8

# FIG. 4

# FIG. 5

# FIG. 6

```
        ┌─────────┐
        │  j = 1  │
        └────┬────┘
             │
        ┌────▼────┐
        │  i = 1  │
        └────┬────┘
             │
             ▼
         ╱ Sj = 0 ╲ ──── 0 ──────────────┐
         ╲        ╱                       │
             │ │                          ▼
             ▼                        ╱ Rj = 1 ╲
        ┌─────────┐         0 ───────╲        ╱
        │ Ci = Rj │         │            1
        └────┬────┘         │            │
             │           ┌──▼──┐         │
        ┌────▼────┐      │ ERR │         │
        │ i = i+1 │      └──┬──┘         │
        └────┬────┘         │            │
             │              │            │
             ◄──────────────┘            │
             ◄───────────────────────────┘
             │
        ┌────▼────┐
        │ j = j+1 │
        └────┬────┘
             │
    0 ───╱ j = L-1 ╲
         ╲        ╱
             │ 1
        ┌────▼────┐
        │  STOP   │
        └─────────┘
```

Office européen
des brevets

# RAPPORT DE RECHERCHE EUROPEENNE

Numero de la demande

EP 94 40 1948

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-3 261 921 (SAHIR SABIR HAKIM ET AL.) <br> * colonne 1, ligne 24 - ligne 69 * <br> * colonne 2, ligne 30 - colonne 3, ligne 7 * <br> --- | 1,2,6 | H04J3/12 |
| A | PATENT ABSTRACTS OF JAPAN <br> vol. 14, no. 200 (E-920) 24 Avril 1990 <br> & JP-A-20 043 837 (MITSUBISHI ELECTRIC CORP) 14 Février 1990 <br> * abrégé * <br> --- | 1 | |
| A | DE-A-41 33 031 (RICOH CO.) <br> * colonne 3, ligne 57 - colonne 4, ligne 66 * <br> --- | 1 | |
| A | EP-A-0 100 820 (ANT NACHRICHTEN GMBH) <br> * page 2, ligne 10 - ligne 24 * <br> * page 5, ligne 15 - ligne 28 * <br> --- | 2 | |
| A | PATENT ABSTRACTS OF JAPAN <br> vol. 13, no. 325 (E-792) 21 Juillet 1989 <br> & JP-A-10 091 539 (NEC CORP) 11 Avril 1989 <br> * abrégé * <br> ----- | 4 | DOMAINES TECHNIQUES RECHERCHES (Int.Cl.6) <br><br> H04J <br> H04L |

Le présent rapport a été établi pour toutes les revendications

| Lieu de la recherche | Date d'achèvement de la recherche | Examinateur |
|---|---|---|
| LA HAYE | 24 Novembre 1994 | Van den Berg, J.G.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)